# EUROPÄISCHE PATENTSCHRIFT

(11) **EP 1 078 804 B1**
(45) Veröffentlichungstag und Bekanntmachung des Hinweises auf die Patenterteilung: **28.02.2007**
(21) Anmeldenummer: 00114599.4
(22) Anmeldetag: 07.07.2000
(51) Int. Cl.: B60W 10/04

(54) **Verfahren und Vorrichtung zur Motor-und Getriebesteuerung bei einem Kraftfahrzeug**
Method and device for engine and transmission control in a motor vehicle
Procédé et appareil de commande d'un moteur et une transmission dans un véhicule

(30) Priorität: 27.08.1999 DE 19940703
(43) Veröffentlichungstag der Anmeldung: 28.02.2001
(73) Patentinhaber: Bayerische Motoren Werke Aktiengesellschaft, 80809 München (DE)
(72) Erfinder: Krenn, Helmut, 85774 Unterföhring (DE); Wolf, Lothar, 81539 München (DE)

(56) Entgegenhaltungen:
- DE-A- 3 830 938
- DE-A- 4 327 906
- US-A- 4 355 550
- US-A- 5 688 207

## Beschreibung

Die Erfindung betrifft ein Verfahren und eine Vorrichtung zur Motor- und Getriebesteuerung gemäß den Oberbegriffen der Ansprüche 1 bzw. 8.

Bei Kraftfahrzeugen mit Verbrennungsmotor wird der Drehzahl- und Drehmomentbereich des Motors durch ein Getriebe auf den Drehzahl- und Drehmomentbereich an der Rädern abgebildet.

Bei älteren Fahrzeugen ist dabei ein Fahrpedal mechanisch direkt mit der Drosselklappe eines Fahrzeugs gekoppelt, so daß sich ein entsprechend der Betätigung des Fahrpedals bestimmtes Motormoment einstellt. Dieses wird entsprechend der Getriebeübersetzung an die Antriebsräder übertragen. Beim Einsatz eines Stufenautomatikgetriebes zwischen dem Antriebsmotor und den Antriebsrädern ergibt sich bei dieser Ausführungsform ein aus den Schaltvorgängen resultierender stufenförmiger Verlauf des Getriebeabtriebsmomentes.

Es ist aber auch bekannt, das Fahrpedal mechanisch von der Drosselklappe zu entkoppeln. In der US 4,893,526 beispielsweise wird aus der Fahrzeuglängsgeschwindigkeit und der Stellung des von einem Fahrer betätigten Fahrpedals ein Sollwert für ein Getriebeausgangsmoment bestimmt. Dabei gibt somit die Fahrpedalstellung nicht direkt das Motorausgangsmoment an, sondern bestimmt letztlich ein Vortriebsmoment an den Rädern, welches direkt von dem Getriebeausgangs-Sollmoment abhängt.

Gemäß der US 4,893,526 wird in Abhängigkeit von diesem Getriebeausgangsmoment eine Soll-Motordrehzahl bestimmt, die durch die Verstellung eines kontinuierlich verstellbaren Fahrzeuggetriebes eingestellt wird. Der Motor und das Getriebe werden dabei von einer Motorsteuerung bzw. einer Getriebesteuerung betrieben.

Aus der VDI-Zeitschrift, Spezial "Antriebstechnik", NR 134, März 1992, S. 26-49 ist eine Steuerung bekannt, die eine gewünschte Motordrehzahl abhängig vom Drosselklappenwinkel ermittelt und diese ebenfalls durch Verstellung eines kontinuierlich verstellbaren Getriebes einregelt.

In der DE 196 26 936 A1 ist ein System zur Einstellung einer Getriebeübersetzung beschrieben, bei dem zunächst eine Solldrehzahl des Motor bestimmt wird und abhängig von dieser Solldrehzahl die Übersetzung des Getriebes geregelt wird. Dabei wird wenigstens eine die Fahrsituation und/oder den Fahrzustand beeinflussende oder repräsentierende Größe ermittelt und die Bestimmung der Solldrehzahl des Motors in Abhängigkeit von dieser Größe durchgerührt,

Aus der DE 197 03 863 1 ist ein Verfahren und eine Vorrichtung nach dem Oberbegriff des Anspruchs 8 zur Steuerung des Antriebsstranges eines Fahrzeugs bekannt. Während des Fahrbetriebes wird ein Sollwert für das Antriebsmoment des Fahrzeugs beziehungsweise für das Getriebeausgangsmoment vorgegeben. Die unterschiedlichen Betriebspunkte des Antriebsstranges sind durch wenigstens unterschiedliche Ausgangsmomente der Antriebseinheit und Drehzahlübersetzungen gekennzeichnet. Während des Fahrbetriebes werden dann für mögliche Betriebspunkte Bewertungsgrößen ermittelt. Durch ein Optimierungsverfahren wird basierend darauf ein optimaler Betriebspunkt gewählt und die dazugehörigen Einstellungen am Getriebe vorgenommen. Alternativ zur Einstellung der Getriebeübersetzung kann auch die zu dem ausgewählten Betriebspunkt gehörende Ausgangsdrehzahl der Antriebseinheit durch eine Änderung der Getriebeübersetzung eingestellt werden.

Allen vorgenannten technischen Lehren ist zueigen, daß sie eine Motorsolldrehzahl über eine Getrieberegelung einstellen. Damit ist es möglich, stetige Radmomentenverläufe (z.B. hyperbelförmige Verläufe gleicher Abtriebsleistung) zu realisieren. Bei Stufenautomatikgetrieben ist eine solche Regelungsweise aufgrund der diskreten Übersetzungsänderungen nicht ohne weiteres möglich.

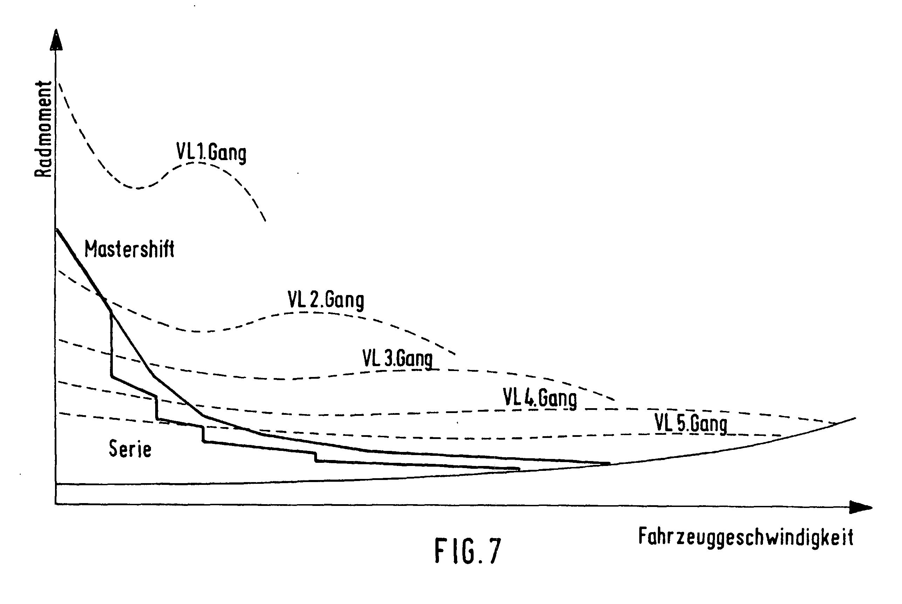

Allerdings wird auch bei Stufenautomatikgetrieben eine Regelung in der Weise angestrebt, daß sich neben weiteren Auslegungsformen das Radantriebsmoment (Radmoment) bei konstanter Fahrpedalstellung stetig (kontinuierlich) über der Fahrzeuggeschwindigkeit ändern läßt. Dieser Zusammenhang ist in Fig. 7 dargestellt. Dabei geben die schwarz gestrichelt dargestellten Linien den Zusammenhang zwischen der Fahrgeschwindigkeit und dem Radmoment bei jeweils fest eingestellter Übersetzung (1. Gang - 5. Gang) und maximalem Fahrpedalwinkel (Motorvollast) wieder. Die schwarze durchgezogene Linie gibt den Radmomentverlauf bei Verwendung eines Stufenautomatikgetriebes mit herkömmlicher Steuerung bei Teil-Fahrpedalstellung (Motorteillast) an. Die weiß gestrichelte Linie gibt die physikalisch maximale Grenzkurve bei Entkopplung der Drosselklappe (Motorvollast) von der Fahrpedalstellung (Teil-Fahrpedalstellung) an. Mit der hyperbelartigen grauen, durchgezogenen Linie ist ein Radmoment/Fahrzeuggeschwindigkeits-Verlauf für Teil-Fahrpedalstellung dargestellt, wie er aus Fahrbarkeits- und Fahrleistungsgründen angestrebt wird (Soll-Verlauf). Ein solcher Verlauf stellt einen kontinuierlichen Zugkraft-Verlauf dar, bei dem ungeachtet der Schaltvorgänge im wesentlichen keine Unstetigkeiten im Abtriebsmomentenverlauf auftreten.

Ziel der vorliegenden Erfindung ist es, ein solches Verhalten auch mit Stufenautomatikgetrieben nachzubilden.

Ein weiteres Ziel ist es, jeglichen gewünschten Radmomenten- bzw. Getriebeabtriebsmomentenverlauf abweichend von der Hyperbelform ohne Unstetigkeiten zu realisieren. Es wird besonders angemerkt, daß sich die Radmomente und das Getriebeantriebsmoment - abgesehen von einem Übersetzungsfaktor - im wesentlichen entsprechen.

Die vorgenannten Aufgaben werden verfahrensmäßig durch die im Anspruch 1 und vorrichtungsmäßig durch die im Anspruch 8 enthaltenen Merkmale gelöst.

Mit der vorliegenden Erfindung wird ein auf einer Momentenkoordination basierendes Antriebsmanagment realisiert. Ein vom Fahrer gewünschtes Moment der Antriebsräder (Radmoment bzw. Getriebeabtriebsmoment) wird realisiert, indem daraus sowohl während als auch außerhalb einer Schaltung des Stufenautomatikgetriebes Soll-Motormomente also Motormomentenvorgaben, nämlich auf die Befüllung und die Zündung wirkende Soll-Motormomentenvorgaben, errechnet werden. Diese Soll-Motormomente bzw. Soll-Motormomentenvorgaben werden von der Gesamtheit aus Momentenkoordinator, Motorsteuerung und Getriebesteuerung berechnet und im Rahmen der physikalischen Grenzen umgesetzt. Aus dem vom Motor im Rahmen der physikalischen Grenzen tatsächlich realisiertem Moment wird das tatsächliche Getriebeabtriebsmoment ermittelt. Durch die permanente Realisierung dieses Getriebeabtriebsmoments, auch während Schaltvorgängen, werden Unstetigkeiten prinzipiell vermieden.

Außerhalb des Schaltvorganges des Stufenautomatikgetriebes wird dies dadurch erreicht, daß zumindest in Abhängigkeit von der Getriebeübersetzung und dem vorgegebenen Getriebeabtriebsmoment eine auf die Füllung wirkende Motormomentenvorgabe M_IND_ACC und/oder ein auf die Zündung wirkende Motormomentenvorgabe M_IND_GS berechnet werden. Damit soll ein bestimmtes Motormoment erreicht werden, welches unter Zwischenschaltung der bekannten Übersetzung gerade das vorgegebene Getriebeabtriebsmoment ergibt. Die Motormomentenvorgaben M_IND_ACC und M_IND_GS werden an die Motorsteuerung abgegeben und von dieser über die Steuerung der Befüllung und der Zündung realisiert. Dabei werden bei der Berechnung bzw. Umsetzung der Motormomente in den Steuerungen (Motorsteuerung und Getriebesteuerung) evtl. noch andere Parameter miteinbezogen.

Innerhalb der physikalischen Grenzen des Motors wird die Momentenvorgabe generell erfüllt; das Getriebeabtriebsmoment somit außerhalb von Schaltvorgängen eingestellt. Kann der Motor die Momentenvorgabe nicht erfüllen, ergibt sich ein von der Vorgabe abweichendes Getriebeabtriebs- bzw. Radmoment, das sich aus dem realisierbaren Motormoment M_IND und den entsprechenden Übersetzungen ergibt.

Während des Schaltvorganges des Stufenautomatikgetriebes erfolgt die Realisierung des Getriebeabtriebsmomentes im wesentlichen über ein im Stufenautomatikgetriebe vorgesehenes Reibelement. Entsprechend der für das Reibelement gewählten Stellgröße wird ein bestimmtes Moment übertragen. Daher wird die Stellgröße während des Schaltvorganges gerade so eingestellt, daß das gewünschte Getriebeabtriebsmoment erzielt wird.

Problematisch kann hierbei jedoch die Belastung des Reibelementes durch die über den Schlupf erzeugte Reibleistung während Schaltvorgängen sein. Zur Erhöhung der Lebensdauer des Reibelementes ist es daher ratsam die Reibleistung innerhalb eines vorgegebenen Niveaus zu halten. Eine solche Regelung ist bereits prinzipiell in der DE 43 27 906 A1 beschrieben, bei der zur Reduzierung des Motordrehmomentes entweder eine Zündverstellung und/oder eine Verstellung der Befüllung beschreibt. Mit einer solchen Einflußnahme kann der Motor auf einen vorgegebenen Drehzahlverlauf eingeregelt werden.

Die Motormomentenvorgaben werden daher in der Form koordiniert, daß zunächst ein Synchronisations-Motormoment M_IND_SYNC errechnet wird, welches das zum Zeitpunkt nach dem Schaltvorgang erforderliche Motormoment angibt. Das auf die Füllung wirkende Moment M_IND_ACC wird zumindest aus dem Synchronisations-Motormoment berechnet und das auf die Zündung wirkende Motormoment M_IND_GS wird derart bestimmt, daß ein vorgegebener und vom Übersetzungssprung bei der Schaltung des Getriebes abhängiger Drehzahlverlauf einregelbar ist. Außerhalb des Schlupfzustandes bleibt des Reibelementes das Getriebeabtriebs- bzw. Radmoment vorzugsweise von Vorhalten des auf die Füllung wirkenden Momentes M_IND_ACC unbeeinflußt bleibt.

Dabei ist es möglich, daß der Motor das angeforderte Motormoment M_IND_ACC nicht erbringen kann. Zur Lösung dieser Problematik wird vorliegend eine Ausgestaltung derart vorgeschlagen, daß während des Schaltvorganges die Vorgaben an die Motorsteuerung entsprechend der Sollvorgabe des Getriebeabtriebsmoments erfolgen, dagegen das Reibelement unter Berücksichtigung des vom Motor realisierbaren Motormomentes eingestellt wird. Voraussetzung hierfür ist, daß das vom Motor realisierbare Motormoment M_IND von einem Motormodell bestimmt wird, welches zusammen mit dem Synchronisations-Motormoment M_IND_SYNC zur Berechnung des Getriebeabtriebsmomentes während Schaltvorgängen und damit der einzustellenden Reibelemen-Stellgröße dient.

Insgesamt ist mit dem obigen Verfahren eine Momenten-Koordination möglich, die es bei einem Stufenautomatikgetriebe sowohl während als auch außerhalb eines Schaltvorganges ermöglicht, beispielsweise ein von einem Fahrpedalinterpreter vorgegebene, über der Fahrzeuggeschwindigkeit hyperbelartig verlaufende Getriebeabtriebsmoment kontinuierlich zu realisieren. Damit können Momentenunstetigkeiten vermieden und eine Zugkraftneutralität im wesentlichen gewährleistet werden.

Beim Schaltvorgang kann man nochmals zwischen Hoch- und Rückschaltung unterscheiden und entsprechend abgestimmte Ausführungsformen der Erfindung definieren.

Bei einem Hochschaltvorgang wird das auf die Füllung wirkende Motormoment M_IND_ACC zu Beginn des Schaltvorganges vorzugsweise auf den nach dem Schaltvorgang erforderlichen Synchronisations-Motormomentenwert M_IND_SYNC gebracht. Damit steht zumindest im Teillastbetrieb während des Schaltvorganges ein ausreichendes, über die Befüllung bereitgestelltes Motormomentenpotential zur Verfügung. Die Einregelung des Motormomentes in der Weise, daß eine bestimmte, vom Übersetzungswechsel bestimmte Drehzahlkurve durchfahren wird und vorzugsweise außerhalb des Schlupfzustandes des Reibelementes das Getriebeabtriebs- bzw. Radmoment von Vorhalten des auf die Füllung wirkenden Momentes M_IND_ACC unbeeinflußt bleibt, wird mittels der Veränderung des auf die Zündung wirkenden Motormoment M_IND_GS durchgeführt. Dieses Motormoment kann von der Getriebesteuerung berechnet und an den Motorkoordinator oder direkt an die Motorsteuerung abgegeben werden.

Bei einem Rückschaltvorgang ergibt sich das Problem, daß während des Schaltvorganges, beispielsweise für den Motorhochlauf, ein größeres Motormoment zur Verfügung gestellt werden muß, als nach der Schaltung in Form des Synchronisationsmomentes benötigt wird. Würde bei einer Rückschaltung wie bei einer Hochschaltung das auf die Füllung wirkende Motormoment M_IND_ACC auf den erforderlichen Motormomentenwert nach der Schaltung M_IND_SYNC eingestellt, so würde der Motor nicht das notwendige Aktionsmoment aufbauen können, um über die Zündung die Drehzahl in den Synchronisationspunkt zu bewegen.

Als Folge davon müßte das Reibelementmoment reduziert werden, um den erforderlichen Motorhochlauf zu realisieren. Damit könnte kein zugkraftneutraler Abriebsverlauf erreicht werden.

Zur Vermeidung dieses Effekts wird gemäß einer weiteren Ausführungsform der Erfindung beim Rückschaltvorgang das auf die Befüllung wirkende Motormoment M_IND_ACC auf einen ausreichenden Wert gebracht. Dazu berechnet man ein Vorhaltemoment, das man zu dem Synchronisationsmoment M_IND_SYNC hinzuaddiert. Insbesondere berücksichtigt man bei dem Vorhaltemoment das zur Drehzahlerhöhung des Motors benötigte Moment. Nach dem Schaltvorgang wird die auf die Befüllung wirkende Motormoment M_IND_ACC wieder dem Synchronisations-Moment M_IND_SYNC gleichgesetzt.

Die Führung des Motors auf einem vorgegebenen Verlauf in den Synchronpunkt, bzw. außerhalb des Schlupfzustandes des Reibelementes die Nichtbeeinflussung des Getriebeabtriebs- bzw. Radmoment durch Vorhalte des auf die Füllung wirkenden Momentes M_IND_ACC, erfolgt über die Einstellung der Größe M_IND_GS.

Infolge physikalischer Grenzen des Motormomentes kann es prinzipbedingt vorkommen, daß das vom Motor über die oben genannten Motormomente M_IND_ACC und M_IND_GS geforderte Motormoment nicht erreicht wird. In diesem Fall ist es nicht sinnvoll (Hochschaltung) bzw. möglich (Rückschaltung), am Getriebeausgang das gewünschte Abtriebsmoment einzustellen. Dies bedeutet, daß man dann die Reibelement-Steuerung bzw. -Regelung während Schaltungen nach korrigierten Vorgaben abwickeln muß, wenn der Motor nicht das gewünschte Moment liefern kann. Wichtig dabei ist, daß man das vom Motor realisierbare Moment, dies ist das unter den aktuellen Rahmenbedingungen über die Befüllung einstellbare Moment, kennt. Das tatsächlich vom Motor realisierbare Moment kann aus einem Motormodell errechnet werden.

Ist gemäß einer Ausführungsform das vom Motor tatsächlich realisierbare Moment kleiner als das Synchron-Motormoment, so wird aus dem Synchron-Motormoment ein resultierendes Synchron-Getriebeabtriebsmoment berechnet und eine Übergangsfunktion ausgehend von dem Getriebeabtriebsmoment vor der Schaltung generiert, die die korrigierte Vorgabe für die Reibelement-Ansteuerung bzw. -Regelung während des Schaltvorganges darstellt (korrigierter Soll-Abtriebsmomentenverlauf).

Gemäß einer weiteren Ausführungsform der Erfindung wird aus dem tatsächlich realisierbaren Motormoment M_IND und dem Zeitverhalten des Motors das Füllungs-Ist-Motormoment M_IND_MOT berechnet.

Ein Vergleich mit einem Motormoment M_IND_AKT, das auf Basis der aktuellen Drehzahlübersetzung des Getriebes auch während Übersetzungswechselvorgängen das erforderliche Motormoment repräsentiert, ergibt eine Reserve-Motormoment M_IND_RES. Dieses Reserve-Motormoment gibt das vorhandene Motorpotential zur Realisierung der Drehzahlvorgaben während Schaltvorgängen an. Es dient zum einen zur Berechnung einer Größe M_IND_GSZF, die wiederum die auf die Zündung wirkende Motormomentengröße M_IND_GS im wesentlichen bestimmt. Die Größe M_IND_GSZF kann an den Motormomentenkoordinator oder direkt an die Motorsteuerung abgegeben werden.

Andererseits dient das Reserve-Motormoment zur Beurteilung, ob in die Reibelement-Steuerung bzw. -Regelung eingegriffen werden muß. Bei einem Motorpotential, welches unter den vorgegebenen Schaltbedingungen zur Einhaltung des vorgegebenen Drehzahlverlaufs nicht ausreicht, wird das Reibelement des Stufenautomatikgetriebes derart eingestellt, daß von dem korrigierten Soll-Abtriebsmomentenverlauf abgewichen wird und sich somit der geforderte Drehzahlverlauf einstellt.

Eine konkrete Ausführungform der Erfindung wird anhand der beiliegenden Zeichnungen näher erläutert. Die Zeichnungen zeigen in
- Figur 1: ein schematisches Blockschaltbild einer Momentenstruktur bei einem erfindungsgemäßen Verfahren,
- Figuren 2a und 2b: Diagramme, welche die Schaltabläufe bei einer Hochschaltung gemäß dem erfindungsgemäßen Verfahren verdeutlichen,
- Figuren 3a und 3b: Diagramme, welche die Schaltabläufe bei einem Rückschaltvorgang gemäß dem erfindungsgemäßen Verfahren darstellen,
- Figur 4: ein Diagramm das demjenigen in den Fig. 2 entspricht, wobei zusätzlich das auf die Zündung wirkende Motormoment eingezeichnet ist,
- Figuren 5a und 5b: Diagramme, die denjenigen in den Fig. 3 entsprechen, wobei ebenfalls das auf die Zündung wirkende Motormoment eingezeichnet ist,
- Fig. 6: eine schematische Darstellung einer erfindungsgemäßen Vorrichtung zur Durchführung des Verfahrens ist und
- Fig. 7: ein Diagramm ist, welches Zusammenhänge zwischen Radmomenten und Fahrzeuggeschwindigkeiten bei verschiedenen Übersetzungen und konstanter Fahrpedalstellung angibt.

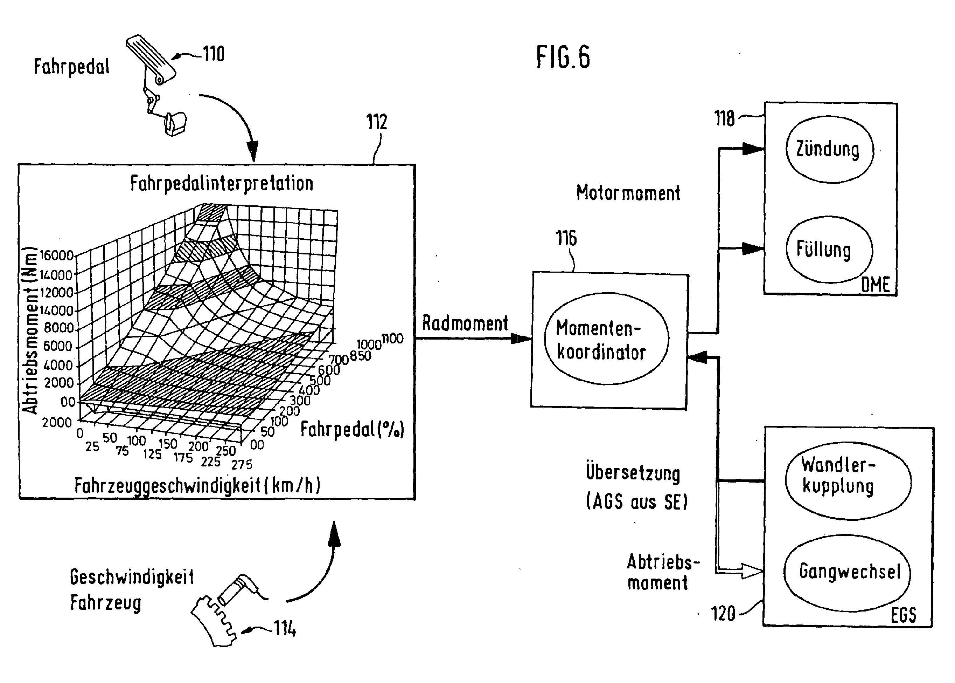

Figur 6 zeigt eine schematische Abbildung einer Ausführungsform der vorliegenden Erfindung. Von einem elektrischen Fahrpedal 110 wird entsprechend seiner Fahrstellung ein Signal erzeugt und an einen Fahrpedalinterpreter 112 weitergegeben. Der Fahrpedalinterpreter 112 erhält zudem ein Signal von einem Geschwindigkeitsgeber 114 und erzeugt unter Berücksichtigung dieser beiden Signale und dem in seinem Speicher abgelegten Zusammenhang zwischen diesen beiden Größen ein Radmoment. Natürlich können auch noch andere Parameter bei der Erzeugung des Radmomentes berücksichtigt werden.

Ferner ist es auch möglich, in besonderen Fahrsituationen, das vom Fahrpedalinterpreter 112 stammende Signal zu überschreiben und von anderen Systemen ein anderes Radmoment vorzugeben. In diesem Zusammenhang wird auf abstandsgesteuerte Regelsysteme hingewiesen, die einen Mindestabstand zu einem vorausfahrenden Fahrzeug einhalten helfen. Darüber hinaus können auch Bremsregelsysteme Radmomentvorgaben abgeben.

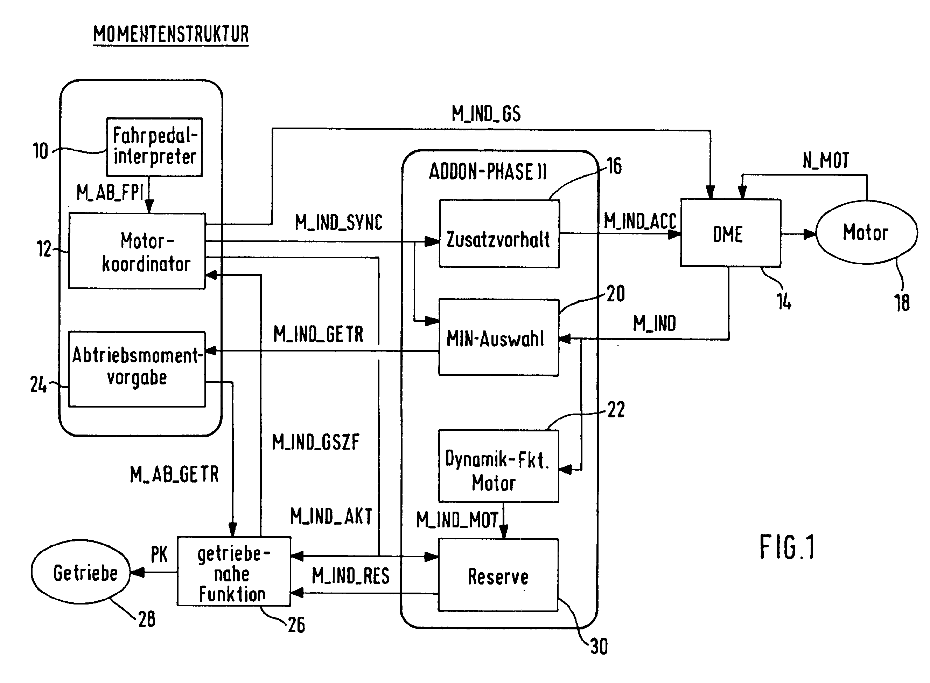

Das erzeugte Radmoment wird an einen Momentenkoordinator 116 abgegeben, der daraus und unter Berücksichtigung von Getriebeeinstellungen Motormomentvorgaben generiert, die er an eine digitale Motorelektronik 118 (DME) weitergibt. Im einzelnen werden Motormomentvorgaben M_IND_ACC und M_IND_GS an die DME 118 gegeben, die auf die Befüllung bzw. die Zündung wirken. Die DME 118 generiert aus den Motormomentvorgaben M_IND_ACC und M_IND_GS sowie weiterer auf Fahrbetriebsbedingungen zurückgehende Parameter Signale für die Befüllung und die Zündung, die dann in bekannter Weise zum Betrieb des (in Fig. 1 nicht dargestellten) Motors führen.

Von einer elektronischen Getriebesteuerung 120 (EGS) erhält der Momentenkoordinator die Daten über die Getriebeeinstellungen, insbesondere die gerade gewählte Übersetzung. An die EGS 120 gibt der Momentenkoordinator 116 das eingestellte bzw. während Schaltvorgängen einzustellende Abtriebsmoment ab. Das EGS 120 steuert ein (nicht dargestelltes) Stufenautomatikgetriebe.

Um das vom Fahrpedalinterpreter 112 vorgegebene Radmoment außerhalb einer Schaltung einzustellen hat der Momentenkoordinator 116 die Aufgabe, die Soll-Motormomente M_IND_ACC und M_IND_GS entsprechend zu wählen. Dabei soll das gewünschte Radmoment oder evtl. ein maximal mögliche Radmoment bei optimaler Verbrennung erreicht werden. Die Verfahren und Vorgehensweisen hierfür sind bekannt, so daß nicht weiter darauf eingegangen wird.

Nachfolgend wird das erfindungsgemäße Verfahren insbesondere mit Blick auf die Schaltvorgänge beschrieben.

In Figur 1 ist eine Momentenstruktur für eine Ausführungsform des erfindungsgemäßen Verfahrens gezeigt. Dabei sind die später noch zu erläuternden Bezugszeichen 12, 16, 20, 22, 24 und 30 dem Momentenkoordinator¹ 16 aus Fig. 6 zuzuordnen. Die Bezugszeichen 26 und 28 sind der Getriebeseite zuzuordnen und die Bezugszeichen 14 und 18 der Motorseite.

Der Fahrpedalinterpreter 10 (entspricht Bezugszeichen 112 aus Fig. 6) erhält dabei von dem Fahrpedal 110 ein Signal und wandelt dies in einen Abtriebsmomentenwunsch M_AB_FPI um, welcher an einen Motorkoordinator 12 weitergegeben wird.

Der Motorkoordinator 12 bestimmt die zugehörigen Motormomentengrößen M_IND_GS, M_IND_SYNC und M_IND_AKT und gibt diese Signale an nachstehend beschriebene Einheiten weiter.

Bei der Momentengröße M_IND_GS handelt es sich um die auf die Zündung wirkende Motormomentenvorgabe, welche direkt der digitalen Motorelektronik (DME) 14 zur Verfügung gestellt wird.

Beim Synchronisations-Motormoment M_IND_SYNC handelt es sich um das Motormoment, welches nach dem Schaltvorgang erforderlich ist.

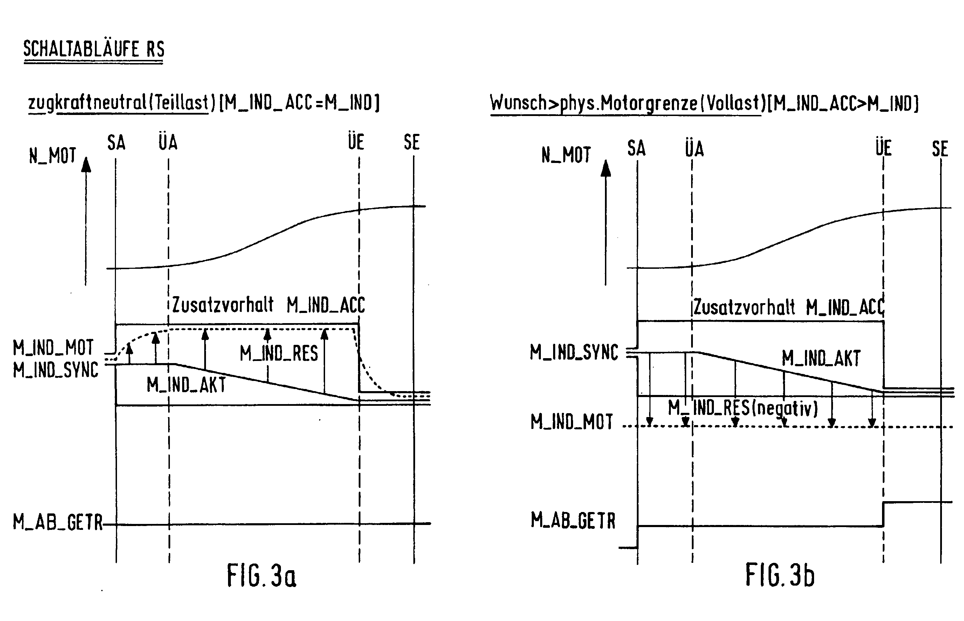

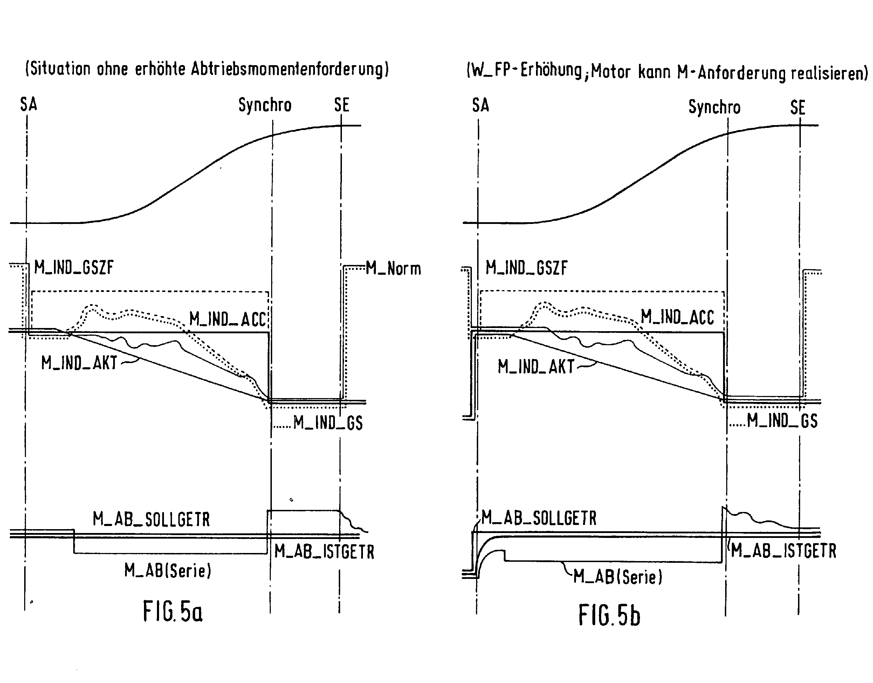

Dieses Signal wird einer Einheit "Zusatzvorhalt" 16 zur Verfügung gestellt. Die Einheit "Zusatzvorhalt" 16 berechnet ein während des Schaltvorganges zusätzlich erforderliches Motormomentenpotential. Dieses Potential kann aus den Motordaten und den Getriebedaten bestimmt werden und berücksichtigt beispielsweise das Moment, welches zum Hochlauf des Motors bei einer Rückschaltung erforderlich ist. Das Motormomentenpotential wird zu dem Synchronisations-Motormoment M_IND_SYNC addiert und in Form der auf die Befüllung wirkenden Motormomentenvorgabe M_IND_ACC an die digitale Motorelektronik 118 abgegeben (vgl. auch Beschreibung zu Fig. 3a und 5a). Die auf die Füllung wirkende Motormomentenvorgabe M_IND_ACC bestimmt als Soll-Motormoment die Füllung in den Zylindern.

Aus den vorgenannten Daten, insbesondere aus den Befüllungsdaten M_IND_ACC und anderen Fahrbetriebsbedingungen - unter anderem der Drehzahldaten N_MOT - berechnet die digitale Motorelektronik 118 nicht nur die Steuerinformationen für den Motor 18 sondern auch das vom Motor 18 tatsächlich realisierbare Motormoment M_IND. Dieses von der auf die Befüllung wirkende Motormomentenvorgabe M_IND_ACC begrenzte Motormoment M_IND wird den Einheiten "MIN-Auswahl" 20 sowie "Dynamik-Funktion Motor" 22 zugeführt. Deren Funktionen werden nachfolgend noch deutlich.

Die Einheit "MIN-Auswahl" 20 erhält ferner das Synchronisations-Motormoment M_IND_SYNC. Aus den der Einheit "MIN-Auswahl" 20 vorliegenden Werten wird eine Minimalauswahl getroffen und das Ergebnis als M_IND_GETR an eine Einheit "Abtriebsmomentvorgabe" 24 abgegeben. Die Einheit "Abtriebsmomentvorgabe" 24 errechnet aus der Größe M_IND_GETR ein Getriebeabtriebsmoment M_AB_GETR und gibt dieses Moment an eine getriebenahe Funktion 26 weiter, die in der Getriebesteuerung 120 realisiert ist. Die Minimalauswahl sorgt also dafür daß sich ein eventuell durch die Einheit "Zusatzvorhalt" 16 hinzuaddiertes Motormoment nicht auf die Größe M_IND_GETR und damit auf das Getriebeabtriebsmoment M_AB_GETR auswirkt.

Hat der Motor ein ausreichendes Potential zur Verfügung, so wird sich das vom Motor realisierbare Moment M_IND nicht unter dem Synchronisations-Motormoment bewegen und von der Einheit "MIN-Auswahl" 20 das Synchronisations-Motormoment M_IND_SYNC ausgewählt.
Reicht die Leistungsfähigkeit des Motors jedoch nicht aus, so wird das vom Motor realisierbare Moment M_IND unter dem Synchronisations-Motormoment M_INC_SYNC liegen und dann wird von der Einheit "MIN-Auswahl" 20 M_IND ausgewählt und an die Einheit Abtriebsmomentvorgabe 24 weitergeleitet. Als Konsequenz wird das Reibelement (z.B. eine Kupplung) auf ein Getriebeabtriebsmoment M_AB_GETR eingestellt, daß dem geringeren Motormoment Rechnung trägt.

Von der getriebenahen Funktion 26 - also der Getriebesteuerung - wird, wie später noch erläutert wird, eine Größe M_IND_GSZF generiert, die im wesentlichen der auf die Zündung wirkenden Motormomentenvorgabe M_IND_GS entspricht und an den Motorkoordinator 12 weitergegeben wird. Alternativ kann die Motormomentengröße M_IND_GSZF gleich auf M_IND_GS übergeführt werden.

Eine Einheit "Dynamik-Funktion Motor" 26 stellt auf der Basis des vom Motor realisierbaren Motormomentes M_IND einer Einheit "Reserve" 30 eine das Zeitverhalten des Motors berücksichtigende Motormomentengröße (Istmoment gemäß Füllung) M_IND_MOT zur Verfügung.

Der Einheit "Reserve" 30 wird ferner ein Momentenwert M_IND_AKT vom Motorkoordinator 12 zur Verfügung gestellt, welcher das entsprechend der Übersetzungsänderung während des Schaltverlaufes erforderliche Motormoment repräsentiert, wobei Schalteinflüsse nicht berücksichtigt sind.

Die Einheit "Reserve" 30 berechnet aus der Dynamikgröße M_IND_MOT und dem Motormoment M_IND_AKT ein vorhandenes Motormomentenpotential M_IND_RES und stellt diese Größe der Einheit "getriebenahe Funktion" 26 zur Verfügung.

Die Einheit "getriebenahe Funktion" 26 berechnet aus den ihr vorliegenden Daten die Steuer- bzw. Regeldaten für das Stufenautomatikgetriebe bzw. die darin enthaltenen Reibelemente. Darüber hinaus wird aus diesen Informationen auch die auf die Zündung Einfluß nehmende Größe M_IND_GSZF errechnet.

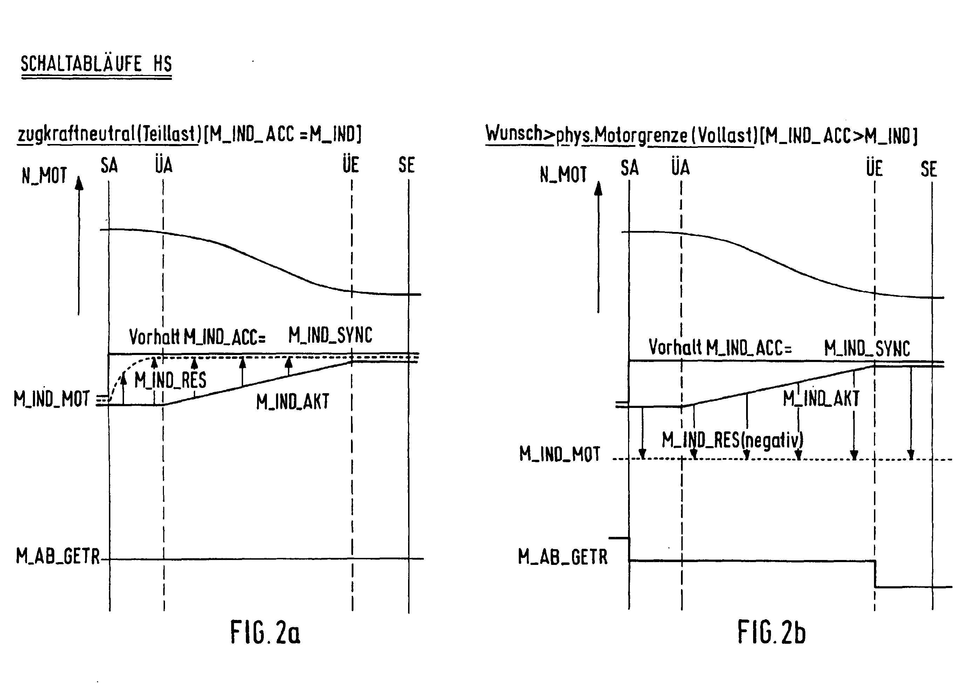

Das Resultat bei der Umsetzung der vorliegenden Momentenstruktur wird nun anhand der Diagramme der Figuren 2 bis 5 näher erläutert.

In Figur 2a ist ein Diagramm, welches einen Schaltablauf bei einer Hochschaltung verdeutlicht, dargestellt, wobei diese Schaltung bei einem Teillastbetrieb stattfindet. In diesem Fall entspricht während des Schaltvorganges M_IND_ACC gleich M_IND_SYNC, nämlich dem Sollmoment nach dem Schaltvorgang. Ein zusätzliches Vorhaltemoment ist nicht notwendig, da der Motor seine Drehzahl während des Schaltvorganges verringert.

Im oberen Teil der Diagramme 2 bis 5 sind jeweils die Drehzahl N_MOT über dem zeitlichen Verlauf des Schaltvorganges (SA = Schaltanfang und SE = Schaltende) dargestellt. Auf diesen Drehzahlverlauf wird eingeregelt.

Im mittleren Teil der Diagramme sind die Motormomentengrößen bzw. Motormomentenvorgaben dargestellt.

Im unteren Teil der Diagramme sind jeweils die Getriebeabtriebsmomente M_AB_GETR gezeigt.

Beim Hochschaltvorgang wird zu Beginn des Schaltvorganges die auf die Füllung wirkende Motormomentenvorgabe M_IND_ACC in einer Stufe auf den Wert angehoben, der dem induzierenden Moment nach dem Schaltvorgang (Synchronisations-Motormoment) M_IND_SYNC entspricht.

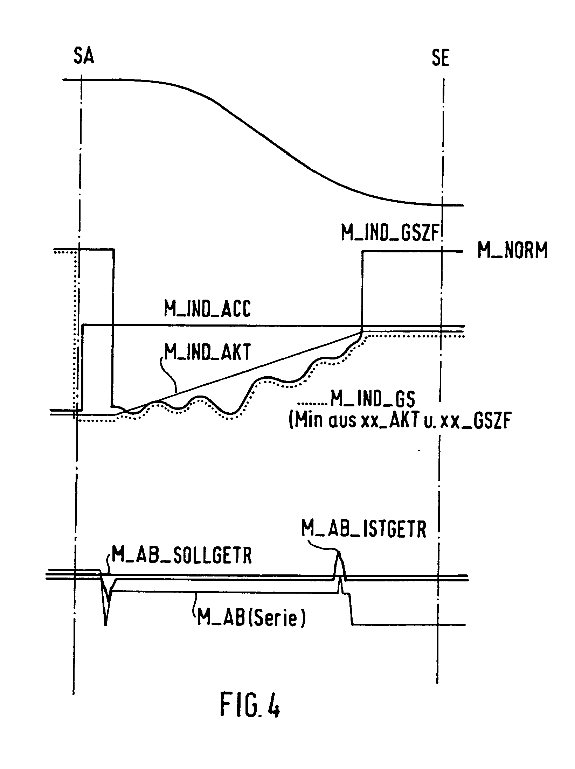

Im Teillastbetrieb, wie er in Fig. 2a dargestellt ist kann das vom Motor realisierbare Motormoment M_IND diesem geforderten Moment auch folgen. Unter Berücksichtigung des Zeitverhaltens des Motors ergibt sich daher ein Dynamik-Motormoment M_IND_MOT, wie es durch die strichlinierte Linie in Fig. 2a dargestellt ist. Gegenüber dem ohne die Schalteinflüsse erforderlichen Moment M_IND_AKT ergibt sich somit während des gesamten Schaltvorganges ein positives Motormomentenpotential M_IND_RES (Pfeile nach oben). Dieses Motormomentenpotential kann bei Hochschaltungen dazu benützt werden den prinzipbedingten kurzen Einbruch des Abtriebsmomentes M_AB_ISTGETR, wie in Fig. 4 unten dargestellt, am Beginn einer Schaltung zu kompensieren.

Die auf die Befüllung wirkende Motormomentvorgabe M_IND_ACC steigt gemäß Fig. 4 beim Schaltbeginn SA stufenförmig an. Das auf die Zündung wirkende Motormoment M_IND_GS verläuft sehr viel komplexer und wird im wesentlichen von der Getriebesteuerung 120 bestimmt und geregelt. Insbesondere kann durch die Veränderung und Vorgabe des auf die Zündung wirkenden Motormomentes M_IND_GS schnell reagiert und geregelt werden. Dies führt zu einer weitgehend optimalen Momentenregelung während des Schaltvorganges, so daß die Reibelemente in ihrer Reibleistung nicht übermäßig belastet werden muß.

Die vorteilhaften Auswirkungen der vorliegenden Momentensteuerung erkennt man in Figur 4 im unteren Teil. Während sich das Abtriebsmoment bei heutigen Serienfahrzeugen M_AB (Serie) noch stufenförmig ändert, weicht das mittels des erfindungsgemäßen Verfahrens erreichte Abtriebsmoment M_AB_ISTGETR nur an zwei Peak-Stellen von der Ideallinie M_AB_SOLLGETR (konstantes Abtriebsmoment) ab.

Im Diagramm 2b ist der Momentenverlauf in einer Situation dargestellt, in der der Fahrerwunsch die Momentenkapazität des Motors (physikalische Grenze) übersteigt. In diesem Fall wird zwar vorab das auf die Füllung wirkende Motormoment M_IND_ACC ebenfalls gleich dem Sollmoment nach dem Schaltvorgang (Synchronisations-Motormoment) M_IND_SYNC gesetzt. Jedoch ergibt sich durch die nicht ausreichende Motormomentenkapazität ein negatives Motormomentenpotential M_IND_RES (Pfeile nach unten). Dies wird an die getriebenahe Funktion 26 gemeldet.

Die Vorgabe des Getriebeabtriebsmomentes M_AB_GETR wird in diesem Fall, wie in Fig. 2b unten zu erkennen ist, in einer frei wählbaren Übergangsfunktion (hier stufenförmig) auf das nach der Schaltung realisierbare Niveau übergeführt.

Die Figuren 3a und 3b sowie 5 sind ähnliche Darstellung wie die Figuren 2a und 2b bzw. 4, zeigen den Verlauf der Motormomente jedoch bei Rückschaltungen.

In Figur 3a ist ein Diagramm dargestellt, welches einen Schaltablauf bei einer Rückschaltung verdeutlicht, wobei diese Schaltung bei einem Teillastbetrieb stattfindet.

Während der Rückschaltung wird auf das Synchronisations-Motormoment M_IND_SYNC ein zusätzlicher Momentenanteil (Zusatzvorhalt) aufaddiert (vgl. Fig. 3a). Ziel ist es dabei, ein größeres Momentenpotential über die auf die Füllung wirkende Motormomentenvorgabe M_IND_ACC (vgl. Fig. 5a, ohne Zusatzvorhalt) zu schaffen, so daß der bei Rückschaltungen notwendige Hochlauf des Motors realisiert werden kann. Dadurch kann die Motordrehzahl auch bei Rückschaltungen in den Synchronpunkt geführt werden. Baut man dieses zusätzliche Potential nicht auf, so ist kein ausreichendes Momentenpotential vorhanden, um über die Zündung M_IND_GS die Drehzahl in den Synchronpunkt zu führen. Als Folge davon könnte ein zugkraftneutraler Abtriebsmomentenverlauf nicht erreicht werden.

Vorliegend jedenfalls wird ein größeres Momentenpotential während der Rückschaltung genutzt, um Unstetigkeiten im Abtriebsmomentenverlauf vermeiden zu können. Die Einheit "Zusatzvorhalt" 16 erhält vom Motorkoordinator 12 die Synchronisations-Motormomentengröße M_IND_SYNC, die der Füllungsvorgabe beim Schaltende entspricht mitgeteilt und addiert zu Schaltbeginn den Zusatzvorhalt hinzu. Die daraus resultierende Füllungsvorgabe M_IND_ACC (vgl. Fig. 3a) wird an die digitale Motorelektronik 14 weitergeleitet und stellt das über die Befüllung einzustellende Soll-Motormoment dar.

Der Motorhochlauf während der Rückschaltung muß dadurch nicht mehr über Absenken der Übertragungsfähigkeit des Reibelementes realisiert werden. Die Übertragungsfähigkeit des Reibelementes kann vielmehr ausschließlich zur Einhaltung des Soll-Getriebeabtriebsmomentes M_AB_GETR genutzt werden. Somit kann ein zugkraftneutraler Antriebsmomentenverlauf auch bei Rückschaltungen gewährleistet werden.

Die Figur 5b entspricht der Figur 5a mit dem Unterschied, daß eine Erhöhung des Antriebsmomentes gewünscht wird und der Motor eine solche Anforderung auch realisieren kann. In diesem Fall werden die einzelnen Motormomentenvorgabewerte so gewählt, daß zu Beginn des Schaltvorganges SA eine Erhöhung des Abtriebsmomentes vorgenommen wird und während des Schaltungsvorganges auch hier das Abtriebsmoment des Getriebes dem gewünschten Verlauf folgt.

Bei der Darstellung gemäß Fig. 3b ist der Fahrerwunsch hinsichtlich eines Antriebsmomentes größer als die physikalische Leistungsfähigkeit des Motors zuläßt. Das Motormomentenpotential M_IND_RES der Funktion "Zusatzvorhalt" ist negativ und das Abtriebsmoment kann nur stufenweise erhöht werden. Dies ist aus dem unteren Teil der Fig. 3b zu erkennen, wonach Momentensprünge im Getriebeabtriebsmoment beim Schaltbeginn und beim Ende der Übersetzungsänderung stattfinden.

## Patentansprüche

1. Verfahren zur Motor- und Getriebesteuerung bei einem Kraftfahrzeug mit einem Verbrennungsmotor, der von einer Motorsteuerung gesteuert wird, und einem Stufenautomatikgetriebe, das von einer Getriebesteuerung gesteuert wird, mit den Schritten:
Vorgabe eines gewünschten Getriebeabtriebsmomentes und Realisieren des Getriebeabtriebsmomentes **dadurch**, daß außerhalb eines Schaltvorganges des Stufenautomatikgetriebes
- zumindest die Getriebeübersetzung erfaßt wird,
- eine auf die Füllung wirkende Motormomentenvorgabe (M_IND_ACC) und/oder eine auf die Zündung wirkende Motormomentenvorgabe (M_IND_GS) zumindest aus der Getriebeübersetzung und dem Getriebeabtriebsmoment berechnet werden und
- diese Größen an die Motorsteuerung, die zumindest in Abhängigkeit von diesen Größen die Befüllung und die Zündung des Verbrennungsmotors steuert, weitergeleitet werden,
und während des Schaltvorganges
- eine Synchronisations-Motormomentenvorgabe (M_IND_SYNC) berechnet wird, welche das zum Zeitpunkt nach dem Schaltvorgang erforderliche Motormoment angibt,
- die auf die Füllung wirkende Motormomentenvorgabe (M_IND_ACC) während des Schaltvorganges zumindest aus der Synchronisationsmomentenvorgabe berechnet wird,
- die auf die Zündung wirkende Motormomentenvorgabe (M_IND_GS, M_IND_GSZF) derart bestimmt wird, daß ein vorgegebener und von der Übersetzungsänderung bei der Schaltung des Getriebes abhängiger Drehzahlverlauf eingeregelt wird,
- das vom Motor realisierbare Motormoment (M_IND) bestimmt wird und
- daß in Abhängigkeit des Minimums aus der Synchronisation-Motormomentenvorgabe (M_IND_SYNC) und dem vom Motor realisierbaren Motormoment (M_IND) ein Getriebeabtriebsmoment (M_AB_GETR) oder ein Verhalten des Getriebeabtriebsmoment (M_AB_GETR) berechnet und über ein Reibelement des Getriebes eingestellt wird.

2. Verfahren nach Anspruch 1,
**dadurch gekennzeichnet,**
**daß** eine Fahrpedalstellung und eine Fahrgeschwindigkeit erfaßt werden und
**daß** zumindest in Abhängigkeit von der Fahrpedalstellung und der Fahrzeuggeschwindigkeit das Getriebeabtriebsmoment (M_AB_GETR) bestimmt wird.

3. Verfahren nach Anspruch 2,
**dadurch gekennzeichnet,**
**daß** ein Getriebeabtriebsmomentenverlauf vorgegeben ist, der sich jeweils bei konstantem Fahrpedal im wesentlichen stufenlos über der Geschwindigkeit ändert.

4. Verfahren nach einem der Ansprüche 1 bis 3,
**dadurch gekennzeichnet,**
**daß** ein Vorhaltemoment bestimmt wird, welches ein während des Übersetzungswechsels erforderliches, über der Synchronisations-Motormomentenvorgabe (M_IND_SYNC) liegendes Momentenpotential definiert, und daß während des Schaltvorganges die auf die Füllung wirkende Motormomentenvorgabe M_IND_ACC als Summe aus der Synchronisationsmomentenvorgabe (M_IND_SYNC) und dem Vorhaltemoment berechnet wird.

5. Verfahren nach einem der Ansprüche 1 bis 4,
**dadurch gekennzeichnet,**
**daß** das vom Motor realisierbare Motormoment (M_IND) mit Hilfe eines Motormodells aus der auf die Befüllung wirkenden Motormomentenvorgabe M_IND_ACC und zumindest eines weiteren Parameters berechnet wird.

6. Verfahren nach einem der Ansprüche 1 bis 5,
**dadurch gekennzeichnet,**
**daß** unter Berücksichtigung des Zeitverhaltens des Motors aus dem vom Motor realisierbaren Motormoment (M_IND) ein Füllungs-Ist-Moment (M_IND_MOT) berechnet wird,
**daß** als Differenz aus diesem Füllungs-Ist-Moment (M_IND_MOT) und einem Motormoment (M_IND_AKT), welches das ohne einen Schaltvorgang erforderliche Motormoment bei einer jeweiligen Übersetzung während des Übersetzungswechselvorganges darstellt, ein Reserve-Motormoment (M_IND_RES) berechnet wird und daß in der Getriebesteuerung unter Einbeziehung des Reserve-Motormoments (M_IND_RES) eine Motormomentengröße (M_IND_GSZF) berechnet wird, welche auf die auf die Zündung wirkende Motormomentenvorgabe M_IND_GS abgebildet wird.

7. Verfahren nach Anspruch 6,
**dadurch gekennzeichnet,**
**daß** ein Bedarfsmotormoment bestimmt wird, welches unter den vorgegebenen Schaltbedingungen zur Einhaltung des vorgegebenen Drehzahlverlaufs notwendig ist und
**daß** dann, wenn das Reserve-Motormoment (M_IND_RES) unterhalb des Bedarfsmotormomentes liegt, eine Reibelement-Steuerung bzw. -Regelung derart durchgeführt wird, daß sich die vorgegebene SollDrehzahl einstellt.

8. Vorrichtung zur Motor- und Getriebesteuerung bei einem Kraftfahrzeug mit einem Verbrennungsmotor (18), der von einer Motorsteuerung (118) gesteuert wird, und einem Automatikgetriebe (28), das von einer Getriebesteuerung (120) gesteuert wird, umfassend:
eine Einheit zur Vorgabe eines Getriebeabtriebsmomentes,
einen Momentenkoordinator (116), mit dieser Einheit verbunden ist,
eine Motorsteuerung (118) und eine Getriebesteuerung (120), die jeweils mit dem Momentenkoordinator (116) verbunden sind, wobei die Motorsteuerung (118) zur Bestimmung eines vom Motor realisierbaren Motormomentes (M_IND) ausgebildet ist,
**dadurch gekennzeichnet, daß** das Automatikgetriebe ein Stufenautomatikgetriebe ist und der Momentenkoordinator (116) derart ausgebildet ist, um
außerhalb eines Schaltvorganges des Stufenautomatikgetriebes (28) eine auf die Füllung wirkende Motormomentenvorgabe (M_IND_ACC) und/oder eine auf die Zündung wirkende Motormomentenvorgabe (M_IND_GS) zumindest in Abhängigkeit von der Getriebeübersetzung und dem Getriebeabtriebsmoment zu berechnen und diese Größen an die Motorsteuerung abzugeben, die in Abhängigkeit von diesen Größen die Befüllung und die Zündung des Verbrennungsmotors steuert, während des Schaltvorganges
eine Synchronisations-Motormomentenvorgabe (M_IND_SYNC) zu berechnen, welche das zum Zeitpunkt nach dem Schaltvorgang erforderliche Motormoment angibt,
die auf die Füllung wirkende Motormomentenvorgabe (M_IND_ACC) während des Schaltvorganges zumindest aus der Synchronisations-Motormomentenvorgabe (M_IND_SYNC) zu berechnen und
die auf die Zündung wirkende Motormomentenvorgabe (M_IND_GS) derart zu bestimmen, daß ein vorgegebener und von der Übersetzungsänderung bei der Schaltung des Stufenautomatikgetriebes abhängiger Drehzahlverlauf einregelbar ist, und
daß die Motor- und Getriebesteuerung derart ausgebildet sind, um in Abhängigkeit von einem Minimum aus der Synchronisations-Motormomentenvorgabe (M_IND_SYNC) und dem vom Motor realisierbaren Motormoment (M_IND) ein Getriebeabtriebsmoment (M_AB_GETR) oder ein Verhalten des Getriebeabtriebsmoments (M_AB_GETR) zu berechnen und einzustellen.

9. Vorrichtung nach Anspruch 8,
**dadurch gekennzeichnet,**
**daß** derMomentenkoordinator (116) Vorhalteeinheit umfaßt, die derart ausgebildet ist, ein Motormomentenpotential für den Zeitraum während des Schaltvorganges zu bestimmen und die auf die Füllung wirkende Motormomentenvorgabe (M_IND_ACC) als die Synchronisations-Motormomentenvorgabe (M_IND_SYNC) zuzüglich des Motormomentenpotentials zu bestimmen.

10. Vorrichtung nach einem der Ansprüche 8 oder 9,
**dadurch gekennzeichnet,**
**daß** der Momentenkoordinator (116) eine Reserveeinheit umfaßt, die aus dem vom Motor realisierbaren Motormoment (M_IND) und einem Zeitverhalten des Motors eine Reserve-Momentengröße (M_IND_RES) berechnet und diese an die Getriebesteuerung abgibt.

## Claims

1. A method of engine and gear control for a vehicle comprising an internal combustion engine controlled by an engine control, also comprising an automatic multi-step reduction gear controlled by a gear control, in the following steps:
setting a required gear output torque and obtaining the gear output torque as follows:
independently of a gear shift by the automatic multi-step reduction gear,
- at least the gear transmission ratio is detected,
- a set engine torque (M_IND_ACC) acting on the charging and/or a set engine torque (M_IND GS) acting on the ignition are calculated at least from the transmission ratio and the gear output torque and
- these quantities are delivered to the engine control, which controls the charging and ignition of the engine in dependence on at least the said quantities, and
during the gear shift
- a set synchronisation engine torque (M_IND_SYNC) is calculated, giving the engine torque required at the moment after the gear change,
- the set engine torque (M_IND_ACC) acting on the charging level is calculated at least from the set synchronisation torque during the gear change,
- the set engine torque (M_IND_GS,M_IND_GSZF) acting on the ignition is determined by obtaining a set speed curve depending on the change in the transmission ratio during the gear shift,
- the engine torque (M_IND) obtainable by the engine is determined and
- in dependence on the minimum of the set synchronisation engine torque (M_IND_SYNC) and the engine torque (M_IND) obtainable by the engine, a gear output torque (M_AB_GETR) or a response of the gear output torque (M_AB_GETR) is calculated and adjusted via a friction component of the gear unit.

2. A method according to claim 1, **characterised in that** an accelerator pedal position and a driving speed are detected and
the gear output torque (M_AB_GETR) are determined at least in dependence on the accelerator pedal position and the speed of the vehicle.

3. A method according to claim 2, **characterised in that** a gear output torque curve is set and varies substantially steplessly with speed when the accelerator pedal position is constant.

4. A method according to any of claims 1 to 3, **characterised in that**
a derivative torque is determined so as to define a torque potential which is required during the gear change and is above the set synchronisation torque (M_IND SYNC), and during the gear shift the set engine torque (M_IND ACC) acting on the charging level is calculated as the sum of the set synchronisation torque (M_IND_SYNC) and the derivative torque.

5. A method according to any of claims 1 to 4, **characterised in that** the torque (M_IND) obtainable by the engine is calculated, using an engine model, from the set engine torque (M_IND_ACC) acting on the charging process and at least one other parameter.

6. A method according to any of claims 1 to 5, **characterised in that** allowing for the time response of the engine, an actual charging torque (M_IND_MOT) is calculated from the available engine torque (M_IND),
the difference between the said actual charging torque (M_IND_MOT) and an engine torque (M_IND ACC) constituting the engine torque required without a gear shift at each transmission ratio during the change in transmission is calculated in the form of a reserve engine torque (M_IND_RES) and
an engine torque quantity (M_IND_GSZF) including the reserve engine torque (M_IND_RES) is calculated in the gear control and is mapped on to the set engine torque (M_IND_GS) acting on the ignition.

7. A method according to claim 6, **characterised in that**
a required engine torque needed for maintaining the set speed curve under the given gear-changing conditions is determined and
when the reserve engine torque (M_IND_RES) is below the required engine torque, a friction element control or regulation is carried out so as to obtain the set speed.

8. A device for engine and gear control in a vehicle comprising an internal combustion engine (18) controlled by an engine control (118) and an automatic gear unit (28) controlled by a gear control (120), comprising
- a unit for setting a gear output torque,
- a torque co-ordinator (116) connected to the said unit,
- an engine control (118) and a gear control (120) each connected to the torque co-ordinator (116), wherein the engine control (118) is designed so as to determine an obtainable engine torque (M_IND),
**characterised in that** the automatic gear is an automatic multi-step reduction gear and the torque co-ordinator (116) is constructed in order
independently of a gear change by the automatic multi-step reduction gear (28)
to calculate a set engine torque (M_IND_ACC) acting on the charging level and/or a set engine torque (M_IND_GS) acting on the ignition at least in dependence on the transmission ratio and the gear output torque and to deliver these quantities to the engine control, which controls the charging and ignition of the engine in dependence on these quantities, and
during the gear change
- to calculate a set synchronisation engine torque (M_IND_SYNC) which gives the engine torque required at the moment after the gear change, to calculate the set engine torque (M_IND_ACC) acting on the charging level during the gear shift, at least from the set synchronisation engine torque (M_IND_SYNC) and
- to determine the set engine torque (M_IND_GS) acting on the ignition so as to obtain a set speed curve depending on the change of gear ratio when the automatic multi-step reduction gear is shifted, and
the engine and the gear control are constructed in order to calculate and set a gear output torque (M_AB_GETR) or a response of the gear output torque (M_AB_GETR) in dependence on a minimum of the set synchronisation engine torque (M_IND_SYNC) and the torque (M_IND) obtainable from the engine.

9. A device according to claim 8, **characterised in that** the torque co-ordinator (116) comprises a derivative unit which is designed so as to determine an engine torque potential for the time after the gear shift and to determine the set engine torque (M_IND_ACC) acting on the charging level and in the form of the set synchronisation engine torque (M_IND_SYNC) plus the engine torque potential.

10. A device according to claim 8 or 9, **characterised in that** the torque co-ordinator (116) comprises a reserve unit which calculates a reserve torque quantity (M_IND_RES) from the torque (M_IND) obtainable from the engine and a time response of the engine and delivers it to the gear control.

## Revendications

1. Procédé de commande d'un moteur et d'une transmission dans un véhicule automobile, équipé d'un moteur à combustion interne commandé par une commande de moteur, et d'une boîte de vitesses automatique étagée commandée par une commande de boîte, comprenant les étapes suivantes :
* prévision d'un couple de sortie de boîte souhaité et
* réalisation du couple de sortie de boîte en ce que, en dehors d'une opération de changement de vitesse de la boîte automatique étagée :
- on saisit au moins le rapport de transmission,
- on calcule une prévision de couple moteur agissant sur le remplissage (M_IND_ACC) et/ou une prévision de couple moteur agissant sur l'allumage (M_IND_GS) au moins à partir du rapport de transmission et du couple de sortie de boîte, et
- on transmet ces grandeurs à la commande du moteur, qui commande le remplissage et l'allumage du moteur à combustion interne au moins en fonction de ces grandeurs,
* et pendant l'opération de changement de vitesse :
- on calcule une prévision de couple moteur de synchronisation (M_IND_SYNC), qui indique le couple moteur nécessaire à l'instant suivant l'opération de changement de vitesse,
- on calcule la prévision de couple moteur agissant sur le remplissage (M_IND_ACC) pendant l'opération de changement de vitesse au moins à partir de la prévision de couple moteur de synchronisation,
- on détermine la prévision de couple moteur agissant sur l'allumage (M_IND_GS, M IND_GSZF) de manière à réguler une allure de régime prédéterminée et dépendant du changement de rapport de transmission lors du changement de vitesse de la transmission,
- on détermine le couple moteur réalisable par le moteur (M_IND),
- on calcule un couple de sortie de boîte (M_AB_GETR) ou un comportement du couple de sortie de boîte (M_AB_GETR) en fonction du minimum entre la prévision de couple moteur de synchronisation (M_IND_SYNC) et le couple moteur réalisable par le moteur (M_IND), et on le règle par un élément de friction de la transmission.

2. Procédé selon la revendication 1,
**caractérisé en ce qu'**
on saisit une position de la pédale d'accélérateur et une vitesse du véhicule, et on détermine le couple de sortie de boîte (M_AB_GETR) au moins en fonction de la position de la pédale d'accélérateur et de la vitesse du véhicule.

3. Procédé selon la revendication 2,
**caractérisé en ce qu'**
on prédétermine une courbe de couple de sortie de boîte, qui varie de façon essentiellement continue en fonction de la vitesse à chaque fois pour une position constante de la pédale d'accélérateur.

4. Procédé selon l'une quelconque des revendications 1 à 3,
**caractérisé en ce qu'**
on détermine un couple de retenue, qui définit un potentiel de couple situé au-delà de la prévision de couple moteur de synchronisation (M_IND_SYNC) et nécessaire pendant le changement de rapport de transmission, et on calcule, pendant l'opération de changement de vitesse, la prévision de couple moteur agissant sur le remplissage (M_1ND_ACC) par la somme de la prévision de couple moteur de synchronisation (M_IND_SYNC) et du couple de retenue.

5. Procédé selon l'une quelconque des revendications 1 à 4,
**caractérisé en ce qu'**
on calcule le couple moteur (M_IND) réalisable par le moteur à l'aide d'un modèle du moteur composé de la prévision de couple moteur agissant sur le remplissage (M_IND_ACC) et d'au moins un autre paramètre.

6. Procédé selon l'une quelconque des revendications 1 à 5,
**caractérisé en ce qu'**
on calcule un couple réel de remplissage (M_IND_MOT) à partir du couple moteur réalisable par le moteur (M_IND), en tenant compte du comportement chronique du moteur, on calcule un couple moteur de réserve (M_IND_RES) par la différence entre ce couple réel de remplissage (M_IND_MOT) et un couple moteur (M_IND_AKT), qui représente le couple moteur nécessaire, sans opération de changement de vitesse, pour un rapport de transmission respectif pendant l'opération de changement de rapport de transmission, et on calcule une grandeur de couple moteur (M_IND_GSZF) dans la commande de la transmission en incorporant le couple moteur de réserve (M_IND_RES), qui est reproduite sur la prévision de couple moteur agissant sur l'allumage (M_IND_GS).

7. Procédé selon la revendication 6,
**caractérisé en ce qu'**
on détermine un couple moteur demandé, qui est nécessaire pour respecter l'allure de régime prédéterminée dans les conditions prédéterminées de changement de vitesse, et on exécute une commande ou une régulation de l'élément de friction, lorsque le couple moteur de réserve (M_IND_RES) se situe en dessous du couple moteur demandé, de manière à obtenir le régime de consigne prédéterminé.

8. Appareil de commande d'un moteur et d'une transmission dans un véhicule automobile, équipé d'un moteur à combustion interne (18) commandé par une commande de moteur (118), et d'une boîte de vitesses automatique (28) commandée par une commande de boîte (120), comprenant :
- une unité de prévision d'un couple de sortie de boîte,
- un coordinateur de couples (116), qui est raccordé à cette unité,
- une commande de moteur (118) et une commande de transmission (120), qui sont chacune raccordées au coordinateur de couples (116), la commande de moteur (118) étant configurée de manière à déterminer un couple moteur réalisable par le moteur (M_IND),
**caractérisé en ce que**
la boîte automatique est une boîte automatique étagée, et
le coordinateur de couples (116) est configuré de façon à :
* en dehors d'une opération de changement de vitesse de boîte automatique étagée (28),
- calculer une prévision de couple moteur agissant sur le remplissage (M_IND_ACC) et/ou une prévision de couple moteur agissant sur l'allumage (M_IND_GS) au moins en fonction du rapport de transmission et du couple de sortie de boîte, et
- transmettre ces grandeurs à la commande du moteur, qui commande le remplissage et l'allumage du moteur à combustion interne en fonction de ces grandeurs,
* pendant l'opération de changement de vitesse,
- calculer une prévision de couple moteur de synchronisation (M_IND_SYNC), qui indique le couple moteur nécessaire à l'instant suivant l'opération de changement de vitesse,
- calculer la prévision de couple moteur agissant sur le remplissage (M_IND_ACC) pendant l'opération de changement de vitesse au moins à partir de la prévision de couple moteur de synchronisation (M_IND_SYNC), et
- déterminer la prévision de couple moteur agissant sur l'allumage (M_IND_GS), de manière à réguler une allure de régime prédéterminée et dépendant du changement de rapport de transmission lors du changement de vitesse de la transmission, et
la commande de moteur et de transmission est configurée de façon à calculer et régler un couple de sortie de boîte (M_AB_GETR) ou un comportement du couple de sortie de boîte (M_AB_GETR) en fonction d'un minimum entre la prévision de couple moteur de synchronisation (M_IND_SYNC) et le couple moteur réalisable par le moteur (M_IND).

9. Appareil selon la revendication 8,
**caractérisé en ce que**
le coordinateur de couples (116) comprend une unité de retenue, qui est configurée de façon à déterminer un potentiel de couple moteur pour le temps que dure l'opération de changement de vitesse et déterminer la prévision de couple moteur agissant sur le remplissage (M_IND_ACC) par la somme de la prévision de couple moteur de synchronisation (M_IND_SYNC) et du potentiel de couple moteur.

10. Appareil selon l'une quelconque des revendications 8 ou 9,
**caractérisé en ce que**
le coordinateur de couples (116) comprend une unité de réserve, qui calcule une grandeur de couple de réserve (M_IND_RES) à partir du couple moteur réalisable par le moteur (M_IND) et d'un comportement chronique du moteur et transmet celle-ci à la commande de la transmission.
